# EUROPEAN PATENT SPECIFICATION

(11) **EP 0 634 315 B1**
(45) Date of publication and mention of the grant of the patent: **25.06.1997**
(21) Application number: 94201369.9
(22) Date of filing: 16.05.1994
(51) Int. Cl.: B62D 7/08, B62D 9/00

(54) **Tie rod configuration for compound steering mechanism**
Ausbildung des Lenkgestänges für eine kombinierte Lenkung
Agencement de barre de timonerie pour mécanisme de direction combiné

(30) Priority: 17.05.1993 US 61470
(43) Date of publication of application: 18.01.1995
(73) Proprietor: NEW HOLLAND U.K. LIMITED, Basildon, Essex SS14 3AD (GB)
(72) Inventor: Hansen, Charles A., Lancaster, PA 17601 (US); Hurlburt, Joseph C., Lancaster, PA 17601 (US)
(74) Representative: Vandenbroucke, Alberic

(56) References cited:
- AT-B- 376 564
- US-A- 3 453 003
- US-A- 5 046 577

## Description

This invention relates generally to a steering mechanism for an agricultural tractor in which the front axle is laterally shiftable in response to a steering movement of the steerable wheels and, more particularly, to a tie rod configuration for controlling the lateral movements of a chassis in response to the pivotal movements of the steerable wheels.

Tractors, whether used in an agricultural setting or in an industrial setting, typically include a fixed axle through which primary driving power is transferred through fixed wheels rotatably mounted on opposing ends of the fixed axle, and a steering axle having pivotally mounted steerable ground engaging wheels rotatably mounted on the opposing ends thereof to support the chassis of the tractor above the ground. Supplemental driving power is often provided through the steerable ground engaging wheels, while a steering mechanism remotely controllable by the operator from the operator's compartment selectively controls the pivotal movement of the steerable wheels relative to the steering axle.

One such steering mechanism incorporates a transversely disposed, horizontally extending hydraulic cylinder supported by the steering axle and connected to the opposing steerable wheels. This hydraulic cylinder affects pivotal movement of the steerable wheels about their respective pivotal connections to the steering axle by manipulating the pressures in the hydraulic cylinder to effect a transverse displacement of the cylinder rod, causing a turning of the wheels.

Due to physical limitations relating to the range of movement of the steering mechanism and to the eventual interference between the steerable wheels and the steering axle or chassis frame, the amount of pivotal movement of the steerable wheels relative to the steering axle is limited by tire size and track setting to a given restricted turning angle. This maximum turning angle defines the minimum turning radius of the tractor for a given chassis clearance width, axle oscillation angle, wheel base length and king pin spacing. The selection of the length of the wheel base, i.e., the distance between the fixed axle and the steering axle, is a compromise between the need to minimize the turning radius and, therefore, minimize the wheel base length, and to maximize ride considerations which require longer wheel base lengths.

These conflicting wheel base requirements can be better resolved by a steering mechanism incorporating a laterally shifting front axle that is movable in response to a corresponding steering movement of the steerable wheels, which will decrease the turning radius of the tractor for any given wheel base length. The steering mechanism must associate the lateral shifting movements of the chassis with the pivotal movements of the steerable wheels. Preferably, the steering mechanism would be convertible from a compound operation, in which the pivotal steering movements of the wheels is coupled to a lateral shifting between the chassis and the transverse axle, and a simple steer operation in which the steering operation is effected in a conventional manner by a mere pivotal movement of the steerable wheels.

It therefore is the objective of the present invention to provide a steering mechanism that can be easily converted between a compound steering operation and a conventional simple steering operation.

According to the invention, a vehicle is provided comprising :
- a chassis;
- a transversely extending steerable axle pivotally mounted to said chassis for lateral movement relative thereto;
- a pair of opposing steerable wheels pivotally connected to the respective transverse ends of said steerable axle; and
- a steering mechanism operably connected to said steerable wheels to control the pivotal movement thereof relative to said axle for controlling the direction of travel of said vehicle, said steering mechanism including means for effecting relative pivotal movement between said axle and said chassis in response to the pivotal movement of said steerable wheels.

Such a vehicle according to the preamble of claim 1 is known from US-A-5046577.

The vehicle is characterized in that it further comprises:
- a first tie rod having spaced apart ends operatively interconnecting the opposing steerable wheels to couple the movements thereof; and
- a second tie rod having a first end connected to said chassis and a remote second end selectively connectable to either said steering mechanism or said transverse axle.

The connection of said second tie rod to said steering mechanism effects a pivotal movement of said chassis relative to said transverse axle in response to a pivotal movement of said steerable wheels, while the connection of said second tie rod to said transverse axle fixes the position of said chassis relative to said transverse axle and prevents relative movement therebetween.

The conversion of the operation of the steering mechanism between compound steer and simple steer therefore can be effected by a relocation of one end of the second tie rod, more specifically by disconnecting one end of the tie rod from its operative connection with the steerable wheels and reconnecting the tie rod end to the transverse axle. In other words, the second tie rod is selectively re-positionable to the transverse axle to disassociate the lateral shifting movements of the chassis from the pivotal movements of the steerable wheels, thereby allowing a selection between a compound steering operation and a conventional-type simple steering operation.

The tie rod utilized to couple the lateral shifting of the chassis in response to the pivotal movement of the steerable wheels is connected at one end at the longitudinal centerline of the chassis to prevent any impact to the steering of the tractor as a result of vertical oscillatory motion of the axle relative to the chassis.

A vehicle in accordance with the present invention will now be described in greater detail, by way of example, with reference to the accompanying drawings, in which :

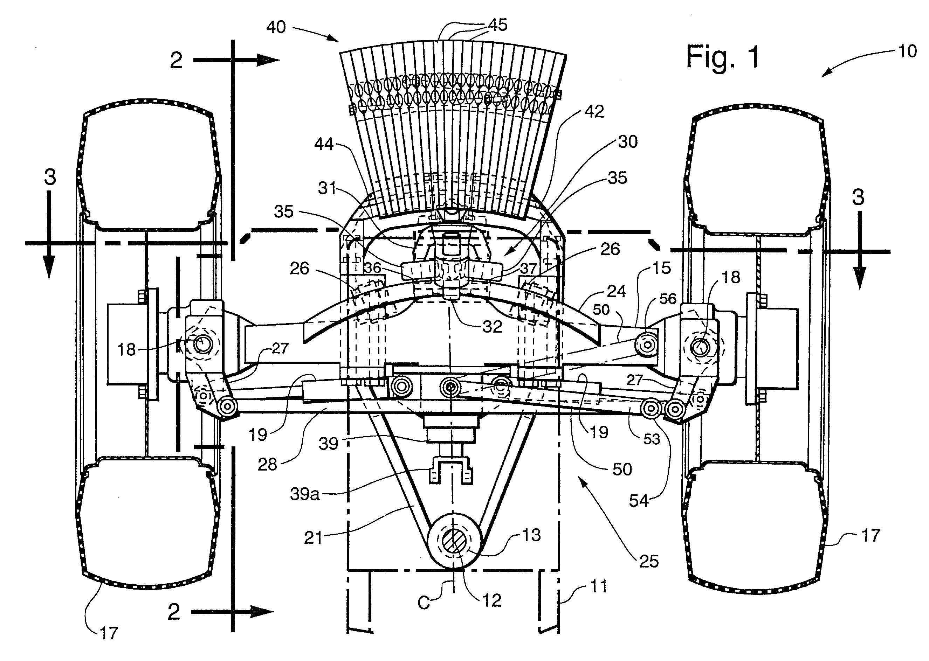

Figure 1 is a top plan view of a front axle assembly for an agricultural tractor incorporating the principles of the instant invention, the front portion of the tractor chassis overlying the front axle assembly being shown in phantom, the alternative position of the short tie rod to convert the compound steering mechanism to a simple steer mode also being shown in phantom;

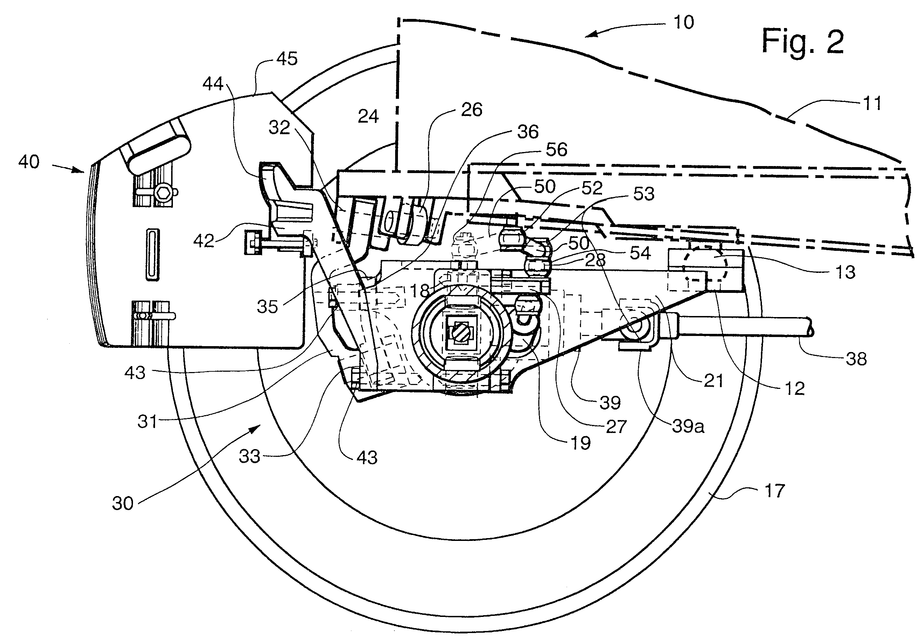

Figure 2 is a cross-sectional view of the front axle assembly taken along lines 2-2 of Figure 1, the front portion of the tractor chassis being shown in phantom relative to the front axle assembly, the alternative position of the short tie rod to convert the compound steering mechanism to a simple steer mode also being shown in phantom; and

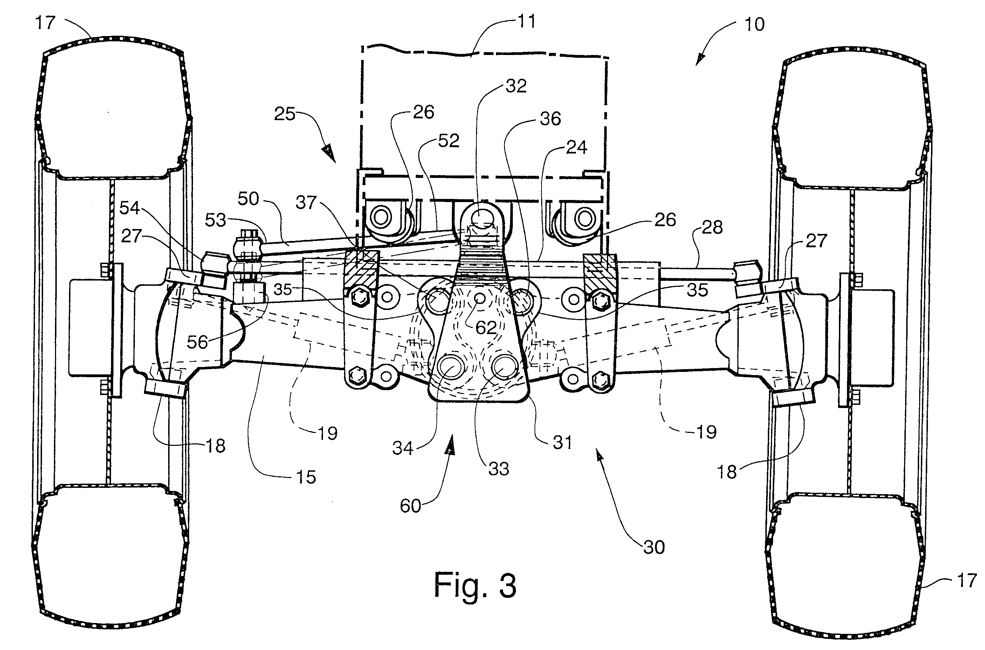

Figure 3 is a cross-sectional view of the tractor front axle assembly taken along lines 3-3 of Figure 1 to depict generally a front elevational view of the tractor assembly immediately rearwardly of the weights, the front portion of the tractor chassis being shown in phantom relative to the front axle assembly.

Referring now to Figures 1-3, a laterally shifting front axle assembly for an agricultural tractor or other vehicle, pivotally connected to the vehicle chassis to provide a decreased turning radius for a given wheel base, can best be seen. The front axle assembly 10 is pivotally connected to the tractor chassis 11 for pivotal movement about a generally vertical axis 12, thereby allowing the front axle assembly 10 to rotate about the pivot axis 12 and shift the front axle assembly 10 laterally relative to tractor chassis 11. The pivot axis 12 includes a spherical ball joint 13 to permit some oscillatory movement of the front axle 15 relative to the chassis 11. The details of a laterally shiftable front axle assembly to provide better turning capabilities is described in detail in US-A-5.046.577 and in EP-A-597515 (prior art under Art. 54(3) EPC).

The front axle assembly 10 includes a transversely extending axle member 15 having pivotally mounted on the respective laterally opposing ends thereof a pair of steerable wheels 17 pivotable about respective nearly vertical king pin axes 18 to effect a steering of the wheels 17 relative to the axle member 15. A pair of hydraulic cylinders 19 interconnect the axle member 15 and the steerable wheels 17 via a steering arm 27 to control the pivotable movement of the wheels 17 relative to the axle member, and thereby, effect steering.

The front axle member 15 carries a rearwardly extending subframe member 21 which carries the vertical pivot 12 and ball joint 13 connected to the tractor chassis 11 rearwardly of the front axle member 15 yet generally positioned laterally between the front steerable wheels 17. A front yoke assembly 30 suspends the laterally shiftable front axle member 15 from the forward end of the tractor chassis 11 to permit a pivotal movement of the front axle assembly 10 relative to tractor chassis 11 about the vertical axis 12. To facilitate relative movement between the front axle assembly 10 and the tractor chassis 11 when the axle is fully oscillated, the front axle member 15 is also provided with an arcuate track 24 having a center of curvature coincident with the pivot axis 12. The chassis 11 carries a pair of laterally spaced rollers 26 that are engageable with the arcuate track 24 when the front axle member 15 oscillates about a generally horizontal axis in response to changing ground contours and undulations so that the rollers 26 provide a limit to the vertical movement of the front axle member 15 relative to the tractor chassis 11 due to an engagement thereof with the arcuate track 24.

A first tie rod 28 interconnects the opposing steering arms 27 to couple the pivotal movements thereof. A second, shorter tie rod 50 has one end 52 attached to the chassis 11 at the longitudinal centerline C and extends to a specially formed mounting point 54 on the first tie rod 28 where the remote second end 53 is connected. One skilled in the art will readily realize that the second end could be mounted substantially anywhere along the pivotally movable steering mechanism 25, including on either of the steering arms 27.

Accordingly, the second tie rod 50 couples the lateral shifting movement of the chassis 11 to the pivotal movement of the steerable wheels 17. As the steerable wheels 17 are pivotally moved relative to the transverse axle 15 by the operation of the hydraulic cylinders 19, the fixed second tie rod 50 transfers the pivotal motion of the wheels 17 via the steering arm 27 and the first tie rod 28 to the chassis 11 to effect a lateral shifting thereof relative to the pivotally connected front axle 15. Although the front axle 15 is pivotally connected to the chassis 11, the front axle 15 is engaged with the ground through the wheels 17 and the actual pivotal movement results in a lateral shifting of the chassis 11. Looking at the front axle 15 from the reference frame of the chassis 11, the appearance is that the axle 15 shifts relative thereto and any reference hereinafter describing the pivotal movement of the front axle member 15 relative to the chassis is so described.

The front yoke assembly 30 has a contoured front carrier member 31 pivotally connected at a second pivot joint 32 to the chassis 11. The front carrier member 31 also carries a pair of transversely spaced third and fourth lower pivots 33, 34, respectively, for pivotally supporting a corresponding pair of dog bone-shaped links 35 which, in turn, are pivotally connected to the front axle member 15 by respective transversely spaced fifth and sixth pivots 36, 37. Each of the pivots 32, 33, 34, 36 and 37 associated with the front yoke assembly 30 have a corresponding pivot axis aligned with the ball joint 13, which is located on the pivot axis 12. Accordingly, the pivot axis for each of the five pivots 32, 33, 34, 36 and 37 have a nonparallel relationship intersecting a common point at the center of the ball joint 13.

As a result, the pivotal movement of the front axle assembly 10 relative to the tractor chassis 11, resulting in a lateral shifting of the front axle member 15, is accomplished through a four-bar linkage which has very little vertical component associated with the movement thereof, yet the chassis 11 maintains a substantially uniform elevation relative to the front axle 15 throughout the range of relative movement between the front steerable axle and the vehicle chassis. The pivot axis for vertical oscillatory movement of the front axle 15 is the axis defined by the second pivot joint 32 extending through the ball joint 13, as both the pivot 32 and the ball joint 13 are fixed relative to the chassis 11. The positioning of the first end 52 of the second tie rod 50 at the longitudinal centerline C of the chassis 11 prevent movements of the axle 15, especially oscillatory movements, from causing any substantial additional steering effect to the axle 15.

As depicted in Figures 1-3, the front axle assembly 10 may be powered in a conventional manner from the transmission (not shown) carried by the tractor chassis 11 through the front wheel drive shaft 38 connected to a conventional front wheel drive mechanism 39 to operatively power the rotation of the steerable wheels 17 to facilitate movement of the tractor chassis 11 over the ground. One skilled in the art will readily realize that the provision of a front wheel drive mechanism 39 is optional and independent of the operation of the compound steering mechanism permitting a lateral shifting of the tractor chassis 11 relative to the front axle member 15. The continuous driving of the front wheels 17 during steering operation involving a lateral shifting of the tractor chassis 11 relative to the front axle member 15 can be accommodated by the universal joint 39a interconnecting the front wheel drive mechanism 39 and the drive shaft 38.

The tractor ballast assembly 40 is carried by the front axle assembly 10 intermediate of the steerable wheels 17 at a position centrally therebetween. A carrier 42 is detachably connected by fasteners 43 to the front axle member 15 to extend forwardly thereof and forwardly of the tractor chassis 11, as well. The carrier 42 is provided with an arcuate mounting ring 44 upon which individual suitcase weights 45 are supported. Since the carrier 42 moves with the front axle member 15 relative to the chassis 11, the position of the ballast assembly 40 relative to the laterally spaced front wheels 17 remains relatively fixed, thereby maintaining a substantially constant weight distribution relative to the front wheels 17.

Furthermore, since the ballast assembly 40 moves with the axle member 15, the steering clearance between the pivotally movable wheels 17 and the ballast assembly 40 does not change as the front axle 15 shifts laterally and/or oscillates vertically. As a result, the operator may mount additional weight units 45 to increase the amount of ballast on the front axle 15 without decreasing the tire clearance below that which is acceptable for traditional tractors. Greater detail in the construction and assemblage of the individual weights 45 to form the ballast assembly 40 can be found in EP-A-581380 (prior art under Art. 54(3) EPC).

The centering of all the pivot axes associated with the pivot joints 32, 33, 34, 36 and 37 at the center of the ball joint 13 allows the unrestricted pivotal movement of the carrier member 31 and the dog-bone link members 35 during the turning movements and for oscillatory or pitching movements as well, without requiring additional motion components to be accommodated during the relative movement of the axle 15 and the chassis 11. It will be understood by one skilled in the art that the specific orientation of these respective pivots 32, 33, 34, 36 and 37 requires the formation of a specially formed carrier member 31 and dog-bone members 35 to orient properly the respective pivots. Furthermore, the carrier member 31 has a somewhat arcuate shape to bow out around the dog-bone members 35 for their unrestricted movement between the carrier member 31 and the axle 15.

To convert the steering mechanism 25 from a compound steering mode, in which the turning of the chassis 11 is accomplished by a combination of a pivotal turning of the wheels 17 and a pivotal movement of the axle 15 relative to the chassis 11, to a simple steering mode, in which turning is accomplished only through operation of the pivoting wheels 17, the second tie rod 50 needs to be disconnected from its mounting 54 on the first tie rod 28 and re-connected to a second mounting connection 56 on the axle 15. As a result, the chassis 11 is fixed to the front axle 15 by the second tie rod 50 and relative movement therebetween is prevented. Furthermore, the disconnection of the second tie rod 50 from the first tie rod 28 eliminates the forces on the chassis 11 to effect a lateral shifting thereof relative to the axle 15.

To further assure that the front axle 15 and the chassis 11 cannot undergo relative movement, a locking apparatus 60 is employed as described in EP-A-597516 (prior art under Art. 54(3) EPC). The locking mechanism 60 consists primarily of a fastener 62 inserted through the front carrier member 31 to engage a corresponding opening in the front axle 15. Since the front yoke assembly 30 cannot pivotally move relative to the front axle 15, there can be no movement of the chassis 11 relative to the axle 15. By repositioning the second tie rod 50 to connect with the axle 15 rather than the first tie rod 28 in conjunction with a subsequent utilization of the locking mechanism 60, the steering mechanism 25 can only operate in a simple steer mode. To re-convert the steering mechanism 25 back into the compound steering mode, the optional locking mechanism 60 would have to be removed (if utilized) and the second tie rod 50 reconnected with the first tie rod 28.

In an alternative embodiment (not shown) the rigid tie rod 28 and the hydraulic cylinders 19 may be replaced by one double-acting hydraulic cylinder which is attached to the front axle 15 and which has two oppositely directed cylinder rods, each of which being operatively connected to a corresponding steering arm 27. As such, the double acting cylinder performs a double function, namely on the one hand acting as an actuator to power the pivotal movement of the steerable wheels 17 relative to the transverse axle 15 and on the other hand performing the function of a tie rod interconnecting the opposing steering arms 27 to steer the wheels in the same direction. Comparable to the arrangement of Figures 1-3, the remote second end 53 of the second tie rod 50 may be attached to either one of the steering arms 27 or to a distal end of one of the cylinder rods, in order to couple the pivotal movement of the steerable wheels 17 to the lateral shifting movement of the chassis 11.

## Claims

1. A vehicle comprising :
- a chassis (11);
- a transversely extending steerable axle (15) pivotally mounted to said chassis (11) for lateral movement relative thereto;
- a pair of opposing steerable wheels (17) pivotally connected to the respective transverse ends of said steerable axle (15); and
- a steering mechanism (25) operably connected to said steerable wheels (17) to control the pivotal movement thereof relative to said axle (15) for controlling the direction of travel of said vehicle, said steering mechanism (25) including means (50) for effecting relative pivotal movement between said axle (15) and said chassis (11) in response to the pivotal movement of said steerable wheels (17); and
characterized in that the vehicle further comprises :
- a first tie rod (28) having spaced apart ends operatively interconnecting the opposing steerable wheels (17) to couple the movements thereof; and
- a second tie rod (50) having a first end (52) connected to said chassis (11) and a remote second end (53) selectively connectable to either said steering mechanism or said transverse axle (15).

2. A vehicle according to claim 1 characterized in that the connection of said second tie rod (50) to said steering mechanism effects a pivotal movement of said chassis (11) relative to said transverse axle (15) in response to a pivotal movement of said steerable wheels (17), while the connection of said second tie rod (50) to said transverse axle (15) fixes the position of said chassis (11) relative to said transverse axle (15) and prevents relative movement therebetween.

3. A vehicle according to claim 1 or 2 characterized in that said first end (52) of said second tie rod (50) is pivotally connected to said chassis (11) along a longitudinal centerline (C) thereof.

4. A vehicle according to claim 3 characterized in that said transverse axle (15) is pivotally movable within a generally vertical plane about a longitudinally extending oscillation axis which coincides with said longitudinal centerline (C).

5. A vehicle according to any of the preceding claims characterized in that said second end (53) of said second tie rod (50) is connectable to said first tie rod (28) to effect the movement of said chassis (11) relative to said transverse axle (15) in response to the pivotal movement of said steerable wheels (17).

6. A vehicle according to any of the claims 1 to 4 characterized in that :
- each said steerable wheel (17) has a steering arm (27) associated therewith to effect pivotal movement of the corresponding steerable wheel (17) relative to the axle (15); and
- said second end (53) of said second tie rod (50) is connectable to one of said steering arms (27) to effect the movement of said chassis (11) relative to said transverse axle (15) in response to the pivotal movement of said steerable wheels (17).

7. A vehicle according to any of the preceding claims characterized in that it further comprises :
- a support linkage (30) pivotally interconnecting said chassis (11) and said transverse axle (15) for support thereof while allowing relative movement therebetween; and
- a locking means (60) selectively cooperable with said support linkage (30) to fix said chassis (11) to said transverse axle (15); said locking means (60) being engaged for positionally fixing said chassis (11) to said transverse axle (15) when said second end (53) of said second tie rod (50) is connected to said transverse axle (15).

8. A vehicle according to any of the preceding claims characterized in that actuator means (19) are operatively associated with said steerable wheels (17) to power the pivotal movement thereof relative to said transverse axle (15).

9. A vehicle according to claim 8 when appended directly or indirectly to claim 6 characterized in that said actuator means (19) includes at least one remotely operable hydraulic cylinder (19) interconnecting said transverse axle (15) and a corresponding one of said steerable arms (27).

10. A vehicle according to any of the preceding claims characterized in that the first tie rod (28) includes a double-acting hydraulic cylinder (-) having oppositely directed cylinders rods operatively connected to the steerable wheels (17).

## Patentansprüche

1. Ein Fahrzeug mit:
- einem Fahrgestell (11),
- einer sich in Querrichtung erstreckenden lenkbaren Achse (15), die schwenkbar an dem Fahrgestell (11) für eine seitliche Bewegung relativ zu diesem befestigt ist,
- zwei entgegengesetzt angeordnete lenkbare Räder (17), die schwenkbar mit den jeweiligen querverlaufenden Enden der lenk baren Achse (15) verbunden sind, und
- einem Lenkmechanismus (25), der betriebsmäßig mit den lenkbaren Rädern (17) verbunden ist, um deren Schwenkbewegung gegenüber der Achse (15) zu steuern, um die Fahrrichtung des Fahrzeuges zu steuern, wobei der Lenkmechanismus (25) Einrichtungen (50) zur Erzielung einer relativen Schwenkbewegung zwischen der Achse (15) und dem Fahrgestell (11) in Abhängigkeit von der Schwenkbewegung der lenkbaren Räder (17) einschließt,
dadurch gekennzeichnet, daß das Fahrzeug weiterhin:
- ein erstes Lenkgestänge (28) mit mit Abstand voneinander angeordneten Enden aufweist, das betriebsmäßig die entgegengesetzt angeordneten lenkbaren Räder (17) miteinander verbindet, um deren Bewegungen zu koppeln, und
- ein zweites Lenkgestänge (50) aufweist, das ein erstes mit dem Fahrgestell (11) verbundenes Ende (52) und ein entfernt angeordnetes zweites Ende (53) aufweist, das selektiv entweder mit dem Lenkmechanismus oder mit der sich in Querrichtung erstreckenden Achse (15) verbindbar ist.

2. Fahrzeug nach Anspruch 1,
dadurch gekennzeichnet, daß die Verbindung des zweiten Lenkgestänges (50) mit dem Lenkmechanismus eine Schwenkbewegung des Fahrgestells (11) relativ zu der querverlaufenden Achse (15) in Abhängigkeit von einer Schwenkbewegung der lenkbaren Räder (17) bewirkt, während die Verbindung des zweiten Lenkgestänges (50) mit der querverlaufenden Achse (15) die Position des Fahrgestells (11) gegenüber der querverlaufenden Achse (15) festlegt und eine relative Bewegung zwischen diesen Teilen verhindert.

3. Fahrzeug nach Anspruch 1 oder 2,
dadurch gekennzeichnet, daß das erste Ende (52) des zweiten Lenkgestänges (50) schwenkbar mit dem Fahrgestell (11) entlang einer längsverlaufenden Mittellinie (C) des Fahrgestells verbunden ist.

4. Fahrzeug nach Anspruch 3,
dadurch gekennzeichnet, daß die querverlaufende Achse (15) schwenkbar in einer allgemein vertikalen Ebene um eine sich in Längsrichtung erstreckende Schwingungsachse beweglich ist, die mit der längsverlaufenden Mittellinie (C) zusammenfällt.

5. Fahrzeug nach einem der vorhergehenden Ansprüche,
dadurch gekennzeichnet, daß das zweite Ende (53) des zweiten Lenkgestänges (50) mit dem ersten Lenkgestänge (28) verbindbar ist, um die Bewegung des Fahrgestells (119 relativ zu der querverlaufenden Achse (15) in Abhängigkeit von der Schwenkbewegung der lenkbaren Räder (17) zu bewirken.

6. Fahrzeug nach einem der Ansprüche 1 bis 4,
dadurch gekennzeichnet, daß:
- jedes der lenkbaren Räder (17) einen ihm zugeordneten Lenkarm (27) aufweist, um die Schwenkbewegung des entsprechenden lenkbaren Rades (17) gegenüber der Achse (15) zu bewirken, und
- das zweite Ende (53) des zweiten Lenkgestänges (50) mit einem der Lenkarme (27) verbindbar ist, um die Bewegung des Fahrgestells (11) gegenüber der querverlaufenden Achse (15) in Abhängigkeit von der Schwenkbewegung der lenkbaren Räder (17) zu bewirken.

7. Fahrzeug nach einem der vorhergehenden Ansprüche,
dadurch gekennzeichnet, daß es weiterhin folgende Teile umfaßt:
- ein Halterungsgestänge (30), das schwenkbar das Fahrgestell (11) und die querverlaufende Achse (15) miteinander verbindet, um diese zu haltern, während eine Relativbewegung zwischen diesen Teilen ermöglicht wird, und
- eine Verriegelungseinrichtung (60), die selektiv mit dem Halterungsgestänge (30) zusammenwirken kann, um das Fahrgestell (11) an der querverlaufenden Achse (15) zu befestigen, wobei die Verriegelungseinrichtung (60) eingerückt wird, um das Fahrgestell (11) positionsmäßig gegenüber der querverlaufenden Achse (159 festzulegen, wenn das zweite Ende (53) des zweiten Lenkgestänges (50) mit der querverlaufenden Achse (15) verbunden ist.

8. Fahrzeug nach einem der vorhergehenden Ansprüche,
dadurch gekennzeichnet, daß Stellgliedeinrichtungen (19) betriebsmäßig mit den lenkbaren Rädern (17) verbunden sind, um deren Schwenkbewegung gegenüber der querverlaufenden Achse (15) anzutreiben.

9. Fahrzeug nach Anspruch 8 unter direkter oder indirekter Rückbeziehung auf Anspruch 6,
dadurch gekennzeichnet, daß die Stellgliedeinrichtung (19) zumindestens einen fernbetätigbaren Hydraulikzylinder (19) einschließt, der die querverlaufende Achse (15) und einen entsprechenden der lenkbaren Arme (27) miteinander verbindet.

10. Fahrzeug nach einem der vorhergehenden Ansprüche,
dadurch gekennzeichnet, daß das erste Lenkgestänge (28) einen doppelwirkenden Hydraulikzylinder (-) einschließt, der entgegengesetzt gerichtete Kolbenstangen aufweist, die betriebsmäßig mit den lenkbaren Rädern (17) verbunden sind.

## Revendications

1. Un véhicule comprenant:
- un châssis (11);
- un essieu de direction (15) s'étendant transversalement, monté à pivotement audit châssis (11) pour permettre un mouvement latéral entre eux;
- une paire de roues directrices (17) opposées reliées à pivotement aux extrémités transversales respectives dudit essieu de direction (15); et
- un mécanisme de direction (25) relié fonctionnellement auxdites roues directrices (17) pour commander leur mouvement de pivotement par rapport audit essieu (15) afin de contrôler la direction de roulage dudit véhicule, ledit mécanisme de direction (25) comprenant des moyens destinés à réaliser un mouvement de pivotement entre ledit essieu (15) et ledit châssis (11) en réponse au mouvement de pivotement des roues directrices (17); et
caractérisé en ce que le véhicule comprend en outre:
- une première barre d'accouplement (28) dont les extrémités distinctes écartées relient fonctionnellement les roues directrices (17) opposées pour coupler leurs mouvements; et
- une seconde barre d'accouplement (50) possédant une première extrémité (52) reliée audit châssis (11) et une seconde extrémité écartée (53) pouvant être reliée sélectivement soit audit mécanisme de direction, soit audit essieu transversal (15).

2. Un véhicule selon la revendication 1, caractérisé en ce que la connexion de ladite seconde barre d'accouplement (50) audit mécanisme de direction opère un mouvement de pivotement dudit châssis (11) par rapport audit essieu transversal (15) en réponse à un mouvement de pivotement desdites roues directrices (17), tandis que la connexion de ladite barre d'accouplement (50) audit essieu transversal (15) fixe la position dudit châssis (11) par rapport audit essieu transversal (15) et empêche leur mouvement relatif.

3. Un véhicule selon la revendication 1 ou 2, caractérisé en ce que ladite première extrémité (52) de ladite seconde barre d'accouplement (50) est reliée à pivotement audit châssis (11) le long de son axe longitudinal (C).

4. Un véhicule selon la revendication 3, caractérisé en ce que ledit essieu transversal (15) est pivotable dans un plan généralement vertical autour d'un axe de balancement à extension longitudinale qui coïncide avec ledit axe longitudinal (C).

5. Un véhicule selon l'une quelconque des revendications précédentes, caractérisé en ce que ladite seconde extrémité (53) de ladite seconde barre d'accouplement (50) peut être connectée à ladite première barre d'accouplement (28) pour effectuer le mouvement dudit châssis (11) par rapport audit essieu transversal (15) en réponse au mouvement de pivotement desdites roues directrices (17).

6. Un véhicule selon l'une quelconque des revendications 1 à 4, caractérisé en ce que:
- chaque dite roue directrice (17) possède un bras de direction (27) qui lui est associé pour opérer un mouvement de pivotement de la roue directrice (17) correspondante par rapport à l'essieu (15); et
- ladite seconde extrémité (53) de ladite seconde barre d'accouplement (50) peut être reliée à l'un desdits bras de direction (27) pour opérer le mouvement dudit châssis (11) par rapport audit essieu transversal (15) en réponse au mouvement de pivotement desdites roues directrices (17).

7. Un véhicule selon l'une quelconque des revendications précédentes, caractérisé en ce qu'il comprend de surcroît:
- un support de liaison (30) reliant par pivotement ledit châssis (11) et ledit essieu transversal (15) pour le soutenir tout en permettant un mouvement relatif entre eux; et
- un moyen de verrouillage (60) associable sélectivement avec ledit support de liaison (30) pour fixer ledit châssis (11) audit essieu transversal (15); ledit moyen de verrouillage (60) étant engagé pour fixer en position ledit châssis (11) audit essieu transversal (15) lorsque ladite seconde extrémité (53) de ladite seconde barre d'accouplement (50) est connectée audit essieu transversal (15).

8. Un véhicule selon l'une quelconque des revendications précédentes, caractérisé en ce que des moyens de commande (19) sont associés fonctionnellement auxdites roues directrices (17) pour entraîner leur mouvement de pivotement par rapport audit essieu transversal (15).

9. Un véhicule selon la revendication 8, lorsqu'elle est annexée directement ou indirectement à la revendication 6, caractérisé en ce que lesdits moyens de commande (19) comprennent au moins un cylindre hydraulique (19) commandable à distance, reliant ledit essieu transversal (15) et une extrémité correspondante d'un desdits bras de direction (27).

10. Un véhicule selon l'une quelconque des revendications précédentes, caractérisé en ce que la première barre d'accouplement (28) comprend un cylindre hydraulique à double action (-) possédant des tiges de cylindre directement opposées reliées fonctionnellement aux roues directrices (17).
